# FASCICULE DE BREVET EUROPEEN

(11) **EP 1 410 481 B1**
(45) Date de publication et mention de la délivrance du brevet: **07.03.2007**
(21) Numéro de dépôt: 00960758.1
(22) Date de dépôt: 29.08.2000
(51) Int. Cl.: H02J 7/14, B60L 11/18

(54) **SYSTEME DE GESTION DE L'ENERGIE ELECTRIQUE D'UN VEHICULE HYBRIDE**
ENERGIEVERWALTUNGSSYSTEM IN EINEM PARALLELHYBRIDFAHRZEUG MIT EINER HAUPT- UND EINER HILFSBATTERIE
SYSTEM FOR MANAGING ELECTRIC POWER IN A HYBRID MOTOR VEHICLE

(30) Priorité: 22.09.1999 FR 9911823
(43) Date de publication de la demande: 21.04.2004
(73) Titulaire: Peugeot Citroen Automobiles SA, 92200 Neuilly sur Seine (FR)
(72) Inventeur: CAILLEUX, Hélène, F-78150 Le Chesnay (FR)
(74) Mandataire: De Cuenca, Emmanuel Jaime
(86) Numéro de dépôt international: PCT/FR2000/002395
(87) Numéro de publication internationale: WO 2001/022556

(56) Documents cités:
- EP-A- 0 578 837
- EP-A- 0 916 547
- US-A- 3 792 327
- US-A- 5 081 365
- US-A- 5 635 805
- US-A- 5 903 112

## Description

La présente invention concerne un système de gestion de l'énergie électrique d'un véhicule hybride parallèle équipé d'un groupe motopropulseur comprenant une machine électrique et une machine thermique et pourvu d'une batterie de puissance et d'une batterie de servitude.

Elle se rapporte plus particulièrement à un système de gestion de l'énergie électrique d'un groupe motopropulseur pour véhicule à motorisation hybride désigné alterno-démarreur.

Quelques définitions sont rappelées ci-après.On connaît essentiellement deux groupes de motorisation hybride, les hybrides dits « série » et les hybrides dits « parallèles ».

Les hybrides série sont des groupes motopropulseurs dans lesquels un moteur thermique tel qu'un moteur à pistons entraîne un générateur qui produit de l'électricité pour alimenter un ou plusieurs moteurs électriques liés aux roues du véhicule. Une batterie d'accumulateurs permet de stocker de l'énergie électrique pour faire fonctionner le moteur électrique.

Les hybrides parallèles sont des groupes motopropulseurs dans lesquels un moteur thermique, une machine électrique alimentée par une batterie d'accumulateurs et une transmission mécanique sont_couplés par l'intermédiaire d'un dispositif permettant de les lier en rotation les uns aux autres. La machine électrique étant susceptible de fonctionner indifféremment en moteur ou en générateur de courant. Ce type de motorisation présente l'avantage de pouvoir utiliser les deux types de propulsion thermique et électrique, alternativement ou simultanément. Le passage d'une configuration de fonctionnement à une autre est assuré par des moyens de commande qui assurent toutes les fonctions de commande et de gestion de puissance.

L'aterno-démarreur est un hybride parallèle particulier, qui comprend un moteur électrique géré électroniquement, intercalé entre le moteur et la boite de vitesses remplaçant le démarreur, l'alternateur et le volant moteur traditionnel. Ce type d'hybride comporte en outre deux, batteries, une batterie de servitude dédiée à l'alimentation du réseau de bord notamment en phase de roulage et une batterie de puissance dédiée principalement à la fourniture d'énergie pour la machine électrique.

Il s'avère que dans un tel type de groupe motopropulseur de l'énergie électrique est consommée afin de la transformer en énergie mécanique lors de la traction ou propulsion du véhicule mais également de l'énergie électrique est créée à partir de l'énergie mécanique lors de la génération, de sorte qu' il est nécessaire de gérer celle-ci.

Le document EP 0 916 547 décrit un véhicule hybride parallèle comprenant un moteur thermique et un moteur électrique et des moyens de contrôle de l'énergie électrique associé à des régulateurs et des dispositifs d'activation respectivement du moteur thermique et du générateur, les moyens de contrôle étant aptes à commander le déclenchement du moteur thermique lorsque le moteur électrique est désactivé.

Le document US 5 903 décrit un procédé pour contrôler la puissance de l'arbre de sortie d'un groupe motopropulseur comprenant un moteur thermique fonctionnant de type diesel et un moteur d'assistance. Ce procédé consiste à commander à l'aide d'un contrôleur le déclenchement du moteur thermique lorsque la capacité résiduelle d'une unique batterie devient inférieure à une valeur minimale.

Le document US 5635805 décrit un véhicule hybride comprenant un arbre moteur, une unité rotationnelle dynamique, des moyens de connexion aptes à connecter le couplage de l'arbre de transmission, des moyens de pilotage d'appareils, une batterie et des moyens de contrôle aptes à contrôler l'état de charge de la batterie.

L'invention a pour but de gérer l'énergie électrique se trouvant dans un tel système afin de garantir un état de charge ou niveau d'énergie suffisant aux batteries de servitude et de puissance, mais également une utilisation de la batterie de puissance dans une plage optimisée pour garantir à la fois les performances de la batterie (durée de vie, puissance) et les performances imposées par le système alterno-démarreur.

A cet effet, l'invention a pour objet un système de gestion de l'énergie électrique d'un véhicule hybride parallèle équipé d'un groupe motopropulseur comprenant une machine électrique et une machine thermique et pourvu d'une batterie de puissance ou haute tension et d'une batterie de servitude ou basse tension, ledit véhicule comprenant un superviseur adapté pour piloter la machine électrique et la machine thermique. Selon l'invention, le système comprend :
- des moyens pour gérer l'énergie du groupe motopropulseur adaptés pour founir les informations indiquant l'estimation du couple de traction, l'estimation du couple de génération et celles booléennes indiquant l'autorisation d'effectuer un arrêt ou de demander un démarrage de la machine thermique;
- des moyens pour gérer la batterie de servitude adaptés pour recevoir en entrée des informations indiquant la température de ladite batterie et adaptés pour fournir en sortie aux moyens de gestion de l'énergie du groupe motopropulseur des informations indiquant la consigne de tension de charge de la dite batterie ;
- des moyens pour gérer la batterie de puissance adaptés pour recevoir en entrée des informations indiquant les températures, le courant de charge et les tensions de ladite batterie et adaptés pour fournir en sortie aux moyens de gestion de l'énergie du groupe motopropulseur des informations indiquant le type de charge de ladite batterie à effectuer.

Avantageusement, les moyens pour gérer la batterie de puissance comprennent des moyens pour déterminer l'état de charge de la batterie de puissance, des moyens de surveillance de la batterie de puissance et des moyens pour décider le type de charge à effectuer adaptés pour recevoir en entrée les informations, éventuellement booléennes, issues desdits moyens.

De préférence,les moyens de surveillance sont adaptés pour transmettre une demande de mise en marche d'un ventilateur en fonction de la température mesurée de la batterie de puissance.

Avantageusement, les moyens de décision sont adaptés pour recevoir en entrée les informations, éventuellement booléennes, sur l'état de charge de la batterie de puissance issues des moyens et celles sur les alertes délivrées par les moyens de surveillance déterminant ainsi selon les différentes alertes activées l'interruption de la charge ou la décharge de la batterie de puissance.

Avantageusement encore, les moyens sont adaptés, en fonction des informations, éventuellement booléennes, de l'état de charge, pour effectuer, la stratégie suivante :
- Si SOC<SOC_P alors charge prioritaire, correspondant à recharger en priorité la batterie pour que l'état de charge s'éloigne de la zone interdite sans tenir compte des rendements de la chaîne de traction,
- Si SOC_P≤SOC<SOC_N alors charge normale, correspondant à recharger la batterie si certaines conditions sont remplies par exemple moteur thermique non arrêté, bon rendement de la chaîne de traction.
- Si SOC≥SOC_N alors pas de charge,
   SOC_P et SOC_N sont des variables qui sont déterminées comme suit :

- Pas de demande de charge à l'arrêt alors SOC_P=50% et SOC_N=95%
- une demande de charge à l'arrêt alors SOC_P=80% et SOC_N=80%.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une représentation synoptique illustrant un exemple de réalisation d'un système de pilotage d'un alterno-démarreur ; et
- la figure 2 est une représentation synoptique illustrant un exemple de réalisation d'un système de gestion de l'énergie selon l'invention.

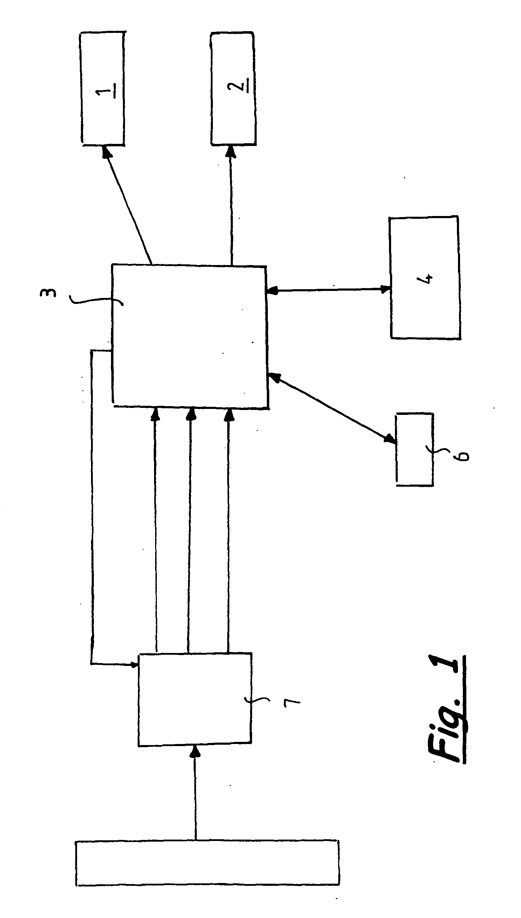

On peut en effet reconnaître sur la figure 1, une machine électrique 1 et une machine thermique 2 qui sont reliées respectivement à un superviseur 3 destiné à les piloter en leur transmettant respectivement une consigne en fonction d'informations de déclenchement reçues à partir d'un calculateur du moteur thermique 4, d'un calculateur de la machine alterno-démarreur 6 et d'un système de gestion de l'énergie électrique 7 selon la présente invention destiné à transmettre principalement au superviseur 3 trois informations respectivement d'estimation du couple de traction, d'estimation du couple de génération et d'autorisation d'effectuer un arrêt ou de demander un démarrage du moteur thermique désigné couramment « stop and go », en fonction d'informations issues en majeure partie des batteries de servitude et de puissance.

On ne décrira pas plus en détail par la suite les calculateurs de la machine alterno-démarreur 6 et du moteur thermique 4 qui reçoivent des informations issues notamment du poste de conduite qui sont par exemple délivrées par des capteurs afin de déterminer les volontés du conducteur car ne faisant pas partie du cadre de l'invention.

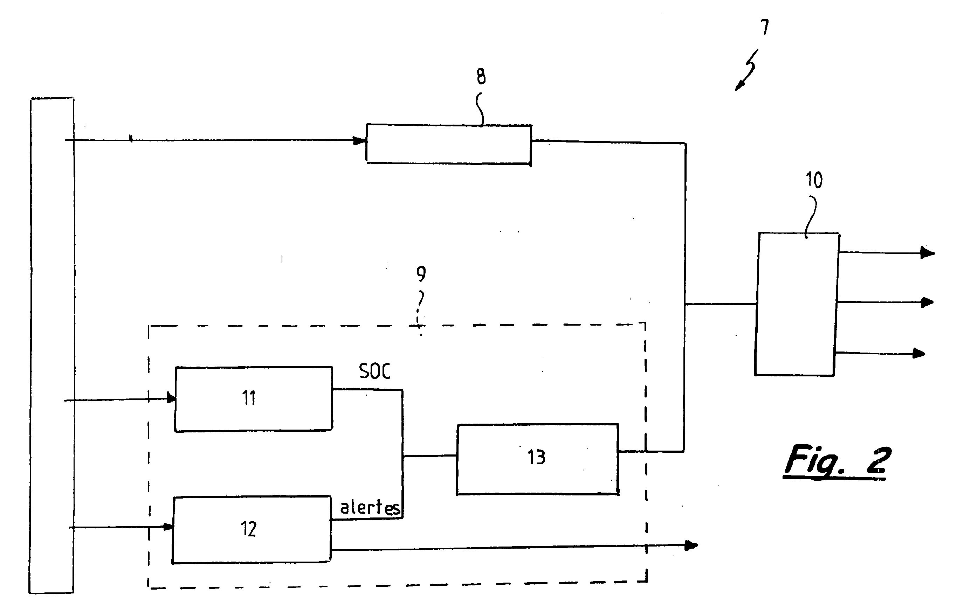

Le système de gestion de l'énergie électrique 7, selon la présente invention, est composé de trois blocs, comme visible à la figure 2, respectivement un bloc de gestion d'une batterie de servitude 8 ou batterie basse tension, d'un bloc de gestion d'une batterie de puissance 9 ou batterie haute tension et d'un bloc de gestion de l'énergie 10 du système alterno-démarreur.

On va décrire successivement la structure et lé fonctionnement de chacun des blocs du système de gestion selon la présente invention.

Le bloc de gestion de la batterie de servitude 8 a pour fonction de déterminer la consigne de tension de ladite batterie en fonction de la température pour la recharge de celle-ci et également de s'assurer que la tension de la batterie de servitude est correcte pendant toute recharge de la batterie de puissance, la batterie de servitude étant capable dans certaines phases de vie particulières du véhicule de la recharger ou de lui fournir un complément de puissance.

Pour cela, le bloc de gestion 8 reçoit en entrée l'information de la température de la batterie de servitude qui est soit délivrée par un capteur associé à ladite batterie, soit reconstituée, afin de délivrer au bloc de gestion de l'énergie 10 une consigne de tension de recharge acceptable par la batterie fonction par exemple d'une courbe pré-établie.

Le bloc de gestion de la batterie de puissance 9, comprend avantageusement un bloc de détermination de l'état de charge de la batterie de puissance 11, un bloc de surveillance de la batterie 12 et un bloc de stratégie de charge 13 qui reçoit en entrée les informations de sortie desdits deux blocs 11 et 12.

Le bloc de détermination de l'état de charge 11 comptabilise les ampères-heures chargés ou déchargés affectés éventuellement d'un rendement, pour cela ledit bloc reçoit en entrée les informations de température et de courant de la batterie qui sont délivrées par des capteurs.

On notera avantageusement qu'avant chaque coupure du calculateur, le dernier état de chargé courant est sauvegardé et qu'à chaque démarrage du groupe motopropulseur, ce dernier état de charge est corrigé en fonction du temps de repos du véhicule correspondant à un paramètre d'autodécharge.

Une réinitialisation de l'état de charge est effectuée à 100%, lorsqu'un des critères de pleine charge est atteint.

Le bloc de surveillance 12 permet de contrôler en fonction des informations de tension et de température délivrées par des capteurs, les températures, la tension totale et les tensions partielles afin de renseigner sur l'utilisation de cette batterie de puissance.

Toute utilisation de la batterie de puissance n'est autorisée et poursuivie que si la température est reprise dans un intervalle compris entre une température minimale Tmin et une température maximale Tmax, de préférence Tmin=-25°C et Tmax=50°C.

Lorsque la température mesurée de la batterie devient trop importante ou lorsque les différentes mesures de température ne sont pas homogènes entre elles, le bloc de surveillance 12 transmet une demande de mise en marche d'un ventilateur assurant ainsi un refroidissement de la batterie.

Par ailleurs, la surveillance de la dérivée de la température par rapport au temps donne une indication sur la fin de la charge de la batterie.

La surveillance de la tension totale permet d'autoriser toute décharge que si la tension est supérieure à une certaine valeur Umin, de préférence Umin=31V. De même, toute charge est autorisée que si la tension est inférieure à une certaine valeur Umax, de préférence Umax=57V.

De plus, les phases de décharge ou de charge sont autorisées que si respectivement les tensions partielles sont supérieures à une certaine valeur Upmin, de préférence Upmin=10.5V et les tensions partielles sont inférieures à une certaine valeur Upmax, de préférence Upmax=19V.

Le bloc de surveillance veille également à l'homogénéité en tension de la batterie. Ainsi, lors du fonctionnement d'une batterie, l'état, et par conséquent la tension, des éléments peut être différent. Ceci se produit lorsque les éléments ne sont pas tous à la même température. C'est ainsi que si la dispersion DU des éléments est trop importante, les performances de la batterie ne sont plus maintenues (capacité, puissance) et. certains éléments peuvent être irrémédiablement endommagés si leur tension devient trop basse. La dispersion DU est calculée à partir des tensions partielles. Un seuil de dispersion maximale admise est déterminé en fonction de l'amplitude du courant instantané afin de déclencher une alerte du bloc de surveillance.

Le bloc de stratégie 13 reçoit en entrée comme mentionné ci-dessus l'information de l'état de charge de la batterie de puissance et des alertes délivrées éventuellement par le bloc de surveillance 12 qui détermine ainsi selon les différentes alertes activées l'interruption de la charge ou la décharge de la batterie.

De manière avantageuse, les essais ont montré que l'état de charge SOC ne doit jamais être inférieur à un état de charge minimal SOCmin, de préférence cet état de charge minimal a été déterminé à 30% afin d'éliminer tout problème de durée de vie de la batterie. De plus, pour garantir une durée de vie de la batterie suffisante, il faut limiter les profondeurs de décharge au maximum. Un fonctionnement optimal serait que l'état de charge de la batterie reste dans la plage 50%-80%.

Le bloc de stratégie va déterminer en fonction de l'information de l'état de charge, la stratégie suivante :
- Si SOC<SOC_P alors charge prioritaire, correspondant à recharger en priorité la batterie pour que l'état de charge s'éloigne de la zone interdite sans tenir compte des rendements de la chaîne de traction,
- Si SOC_P≤SOC<SOC_N alors charge normale, correspondant à recharger la batterie si certaines conditions sont remplies par exemple moteur thermique non arrêté, bon rendement de la chaîne de traction.
- Si SOC≥SOC_N alors pas de charge,
   SOC_P et SOC_N sont des variables qui sont déterminées comme suit :

- Pas de demande de charge à l'arrêt alors SOC_P=50% et SOC_N=95%
- une demande de charge à l'arrêt alors SOC_P=80 et SOC_N=80%.

Le bloc de stratégie délivre donc une information sur le type de charge à envisager qui est transmise au bloc de gestion d'énergie du système.

Ce bloc a pour fonction de définir la stratégie de pilotage du convertisseur courant continu DC/DC et à calculer les demandes de couple de charge en fonction des possibilités du système électrique et de critère de consommation (rendement de charge).

Pour ce faire ce bloc comporte la détermination du potentiel du système électrique et le pilotage électrique.

La détermination du potentiel consiste à synthétiser les actions réalisables par le système électrique (couple de traction électrique, couple de charge, stop and go) et les attentes du système électrique (demande d'aide pour le démarrage à froid) en fonction de l'état de charge de la batterie, de sa température, du couple réalisable par la machine électrique et de la consommation du réseau de bord 12V.

Le pilotage du réseau électrique consiste à connecter ou non le convertisseur courant continu DC/DC du système alterno-démarreur sur le réseau haute tension en fonction des situations de vie du système. Ce pilotage consiste également d'une part à commander la tension de consigne du convertisseur DC/DC en fonction des situations de vie du système (démarrage à froid, roulage, charge à l'arrêt) et d'autre part de déterminer les demandes de couple de charge en fonction de la stratégie de charge et les optimiser.

On conçoit alors qu'en fonction des différents paramètres fournis par le système de gestion selon la présente invention, le superviseur 3 détermine quelle action il est possible d'effectuer afin de s'approcher au mieux de la demande du conducteur en fonction de l'énergie disponible.

Il va de soi bien entendu que différents modes de réalisation d'un tel système peuvent être envisagés; dans le cadre défini par les revendications.

## Revendications

1. Système de gestion (7) de l'énergie électrique d'un véhicule hybride parallèle équipé d'un groupe motopropulseur comprenant une machine électrique (1) et une machine thermique (2) et pourvu d'une batterie de puissance ou haute tension et d'une batterie de servitude ou basse tension, ledit véhicule comprenant un superviseur (3) adapté pour piloter la machine électrique (1) et la machine thermique (2), le système de gestion (7) comprenant des moyens (10) pour gérer l'énergie du groupe motopropulseur adaptés pour fournir les informations indiquant l'estimation du couple de traction, l'estimation du couple de génération et celles booléennes indiquant l'autorisation d'effectuer un arrêt ou de demander un démarrage de la machine thermique et des moyens (9) pour gérer la batterie de puissance adaptés pour recevoir en entrée des informations indiquant les températures, le courant de charge et les tensions : de ladite batterie et adaptés pour fournir en sortie aux moyens (10) de gestion' de l'énergie du groupe motopropulseur des informations indiquant le type de charge de ladite batterie à effectuer, **caractérisé en ce qu'**il comprend-des moyens (8) pour gérer la batterie de servitude adaptés pour recevoir en entrée des informations indiquant la température de ladite batterie et adaptés pour fournir en sortie, aux moyens (10) de gestion de l'énergie du groupe motopropulseur des informations indiquant la consigne de tension de charge de ladite batterie.

2. Système selon la revendication 1,
**caractérisé en ce que** les moyens (9) pour gérer la batterie de puissance comprennent des moyens (11) pour déterminer, l'état de charge de la batterie de puissance, des moyens (12) de surveillance de la batterie ede puissance et des moyens (13) pour décider le type de charge à effectuer adaptés pour recevoir en entrée les informations éventuellement booléennes issues desdits moyens (11, 12).

3. Système selon la revendication 2,
**caractérisé en ce que** les moyens de surveillance (12) sont adaptés pour transmettre une demande de mise en marche d'un ventilateur en fonction de la température mesurée de la batterie de puissance.

4. Système selon l'une des revendications 2 ou 3, **caractérisé en ce que** les moyens de décision (13) sont adaptés pour recevoir en entrée les informations, évntuellement booléennes, sur l'état de charge de la batterie de puissance issues des moyens (11) et celles sur les alertes délivrées par les moyens de surveillance (12) déterminant ainsi selon les différentes alertes activées l'interruption de la charge ou la décharge de la batterie de puissance.

5. Système selon la revendication 4,
**caractérisé en ce que** les moyens (13) sont adaptés, en fonction des informations, éventuellement booléennes, de l'état de charge, pour effectuer la stratégie suivante :
- Si SOC<SOC_P alors charge prioritaire, correspondant à recharger en priorité la batterie pour que l'état de charge s'éloigne de la zone interdite sans tenir compte des rendements de la chaîne de traction,
- Si SOC_P≤SOC<SOC_N alors charge normale, correspondant à recharger la batterie si certaines conditions sont remplies par exemple moteur thermique non arrêté, bon rendement de la chaîne de traction.
- Si SOC≥SOC_N alors pas de charge,
SOC_P et SOC_N sont des variables qui sont déterminées comme suit :
- Pas de demande de charge à l'arrêt alors SOC_P=50% et SOC_N=95%
- une demande de charge à l'arrêt alors SOC_P=80% et SOC_N=80%.

## Claims

1. System (7) for managing electric power in a parallel hybrid vehicle equipped with a drive train comprising an electric machine (1) and a thermal machine (2) and equipped with a power or high-voltage battery and a duty or low-voltage battery, said vehicle comprising a supervisor (3) adapted to drive the electric machine (1) and the thermal machine (2), the management system (7) comprising means (10) for managing the power of the drive train adapted to supply information indicating the estimate of the traction torque, the estimate of the generating torque and Boolean information indicating the authorisation to stop or to request starting of the thermal machine and means (9) for managing the power battery adapted to receive, as an input, information indicating the temperature, the charging current and the voltage of said battery and adapted to supply, as an output to the power management means (10) of the drive train, information indicating the type of charging to be performed for said battery, **characterised in that** it comprises means (8) for managing the duty battery adapted to receive, as an input, information indicating the temperature of said battery and adapted to supply, as an output to the power management means (10) of the drive train, information indicating the set charging voltage of said battery.

2. System according to Claim 1, **characterised in that** the means (9) for managing the power battery comprise means (11) for determining the charging status of the power battery, means (12) for monitoring the power battery and means (13) for deciding on the type of charging to be performed adapted to receive, as an input, information, possibly Boolean, from said means (11, 12).

3. System according to Claim 2, **characterised in that** the monitoring means (12) are adapted to transmit a request to start a fan according to the measured temperature of the power battery.

4. System according to one of Claims 2 or 3, **characterised in that** the decision-making means (13) are adapted to receive, as an input, information, possibly Boolean, on the charging status of the power battery from the means (11) and information on the alerts issued by the monitoring means (12) thus causing the interruption of charging or discharging of the power battery according to different activated alerts.

5. System according to Claim 4, **characterised in that** the means (13) are adapted, according to the information, possibly Boolean, on the charging status, to carry out the following strategy:
- If SOC<SOC_P then priority charging, corresponding to priority recharging of the battery so that the charging status moves away from the prohibited zone without taking account of the outputs of the traction train,
- If SOC_P≤SOC<SOC_N then normal charging, corresponding to recharging of the battery if certain conditions are met for example thermal engine not stopped, good output of the traction train.
- If SOC≥SOC_N then no charging,
SOC_P and SOC_N are variables that are determined as follows:
- No request for charging on stopping then SOC_P=50% and SOC_N=95%
- a request for charging on stopping then SOC_P=80% and SOC_N=80%.

## Patentansprüche

1. System zur Verwaltung (7) der elektrischen Energie eines Parallelhybrid-Fahrzeugs mit einem Antrieb, der einen Elektromotor
(1) und einen Verbrennungsmotor (2) aufweist, und mit einer Hochleistungs- oder Hochspannungsbatterie und einer Hilfs- oder Niederspannungsbatterie, wobei das Fahrzeug eine Überwachungseinheit (3) zum Steuern des Elektromotors (1) und des Verbrennungsmotors (2) aufweist, wobei das Verwaltungssystem (7) Mittel (10) zum Verwalten der Energie des Antriebs aufweist, die Informationen über die Schätzung des Antriebsmoments und des Krafterzeugungsmoments sowie Boolesche Informationen über die Erlaubnis, den Verbrennungsmotor anzuhalten oder einen Start zu verlangen, liefern können, sowie Mittel (9) zum Verwalten der Hochleistungsbatterie, die am Eingang Informationen über die Temperaturen, den Ladestrom und die Spannungen der Batterie empfangen können und am Ausgang den Mitteln (10) zur Verwaltung der Energie des Antriebs Informationen über die Art des durchzuführenden Ladens der Batterie liefern können, **dadurch gekennzeichnet, dass** es Mittel (8) zum Verwalten der Hilfsbatterie aufweist, die am Eingang Informationen über die Temperatur der Batterie empfangen können und am Ausgang den Mitteln (10) zur Verwaltung der Energie des Antriebs Informationen über die Sollspannung der Ladung der Batterie liefern können.

2. System nach Anspruch 1, **dadurch gekennzeichnet, dass** die Mittel (9) zum Verwalten der Hochleistungsbatterie Mittel (11) zum Bestimmen des Ladezustands der Hochleistungsbatterie, Mittel (12) zum Überwachen der Hochleistungsbatterie und Mittel (13) zum Entscheiden über die Art des durchzuführenden Ladens aufweisen, wobei Letztere am Eingang die möglicherweise Booleschen Informationen aus den Mitteln (11, 12) empfangen können.

3. System nach Anspruch 2, **dadurch gekennzeichnet, dass** die Überwachungsmittel (12) abhängig von der gemessenen Temperatur der Hochleistungsbatterie eine Aufforderung zum Ingangsetzen eines Ventilators übertragen können.

4. System nach einem der Ansprüche 2 oder 3, **dadurch gekennzeichnet, dass** die Entscheidungsmittel (13) am Eingang die möglicherweise Booleschen Informationen über den Ladezustand der Hochleistungsbatterie aus den Mitteln (11) und die Informationen über die von den Überwachungsmitteln (12) ausgegebenen Warnungen empfangen können und so je nach den verschiedenen aktivierten Warnungen das Unterbrechen des Ladens oder das Entladen der Hochleistungsbatterie bestimmen.

5. System nach Anspruch 4, **dadurch gekennzeichnet, dass** die Mittel (13) abhängig von den möglicherweise Booleschen Informationen über den Ladezustand die folgende Strategie verfolgen können:
- Wenn SOC<SOC_P, dann vorrangiges Laden, was dem vorrangigen Aufladen der Batterie entspricht, damit sich der Ladezustand vom verbotenen Bereich entfernt, ohne die Leistungen des Antriebsstrangs zu berücksichtigen.
- Wenn SOC_P≤SOC<SOC_N, dann normales Laden, was dem Aufladen der Batterie entspricht, wenn bestimmte Bedingungen erfüllt sind, wie zum Beispiel: Verbrennungsmotor nicht angehalten, gute Leistung des Antriebsstrangs.
- Wenn SOC≥SOC_N, dann kein Laden,
wobei SOC_P und SOC_N Variablen sind, die wie folgt bestimmt werden:
- keine Ladeaufforderung im Stillstand, dann SOC_P=50% und SOC_N=95%
- Ladeaufforderung im Stillstand, dann SOC_P=80% und SOC_N=80%.
